# EUROPÄISCHE PATENTSCHRIFT

(11) **EP 1 103 159 B1**
(45) Veröffentlichungstag und Bekanntmachung des Hinweises auf die Patenterteilung: **05.04.2006**
(21) Anmeldenummer: 99932803.2
(22) Anmeldetag: 02.07.1999
(51) Int. Cl.: H04Q 11/04, H04Q 3/545

(54) **VERFAHREN ZUM BETREIBEN EINER ANSCHLUSSEINHEIT IN EINER VERMITTLUNGSSTELLE**
METHOD FOR OPERATING A TERMINAL UNIT IN A TELEPHONE EXCHANGE
PROCEDE POUR FAIRE FONCTIONNER UNE UNITE TERMINALE DANS UN CENTRAL TELEPHONIQUE

(30) Priorität: 07.08.1998 EP 98114942
(43) Veröffentlichungstag der Anmeldung: 30.05.2001
(73) Patentinhaber: SIEMENS AKTIENGESELLSCHAFT, 80333 München (DE)
(72) Erfinder: EDER, Michael, D-83564 Soyen (DE); LEUTNER, Klaus, D-82008 Unterhaching (DE); RIEDEL, Siegmar, D-80637 München (DE); ZITTINGER, Burkhard, D-81479 München (DE)
(86) Internationale Anmeldenummer: PCT/EP1999/004626
(87) Internationale Veröffentlichungsnummer: WO 2000/008892

(56) Entgegenhaltungen:
- EP-A- 0 303 870
- EP-A- 0 527 260
- WO-A-93/00776
- WO-A-95/23492
- WO-A-97/48240
- GB-A- 2 240 905
- P. BOROJEVIC ET AL: "The principles of the software organization in the digital switching system DKTS" PROCEEDINGS OF THE MEDITERRANEAN ELECTROTECHNICAL CONFERENCE - MELECON '87, 1987, Seiten 47-51, XP002090211 Italy

## Beschreibung

Die Erfindung betrifft ein Verfahren zum Betreiben einer Anschlußeinheit in einer Vermittlungsstelle, bei dem beim Ausführen von Anwendungsprogrammen vermittlungstechnische Vorgänge durchgeführt werden. Ein solcher vermittlungstechnischer Vorgang ist z.B. die Signalisierung für einen ersten Teilnehmer. Weitere vermittlungstechnische Vorgänge betreffen die Verbindungssteuerung beim Auf- und Abbau einer Verbindung zwischen dem ersten Teilnehmer und einem zweiten Teilnehmer. Der Ablauf der Anwendungsprogramme wird von einem Betriebssystem gesteuert, das als Bindeglied zwischen Anwendungsprogrammen und elektronischen Bauelementen des Rechners dient. Das Betriebssystem steuert verschiedene Betriebsfunktionen des Rechners und übernimmt zentrale Aufgaben, wie z.B. die Speicherverwaltung und die Geräteansteuerung.

Die Erfindung betrifft außerdem ein Verfahren zum Betreiben einer Anschlußeinheit in einer Vermittlungsstelle, bei dem die Signalisierung mit einer weiteren Vermittlungsstelle und die Verbindungssteuerung beim Ausführen von Anwendungsprogrammen durchgeführt werden. Ferner betrifft die Erfindung Anschlußeinheiten zum Durchführen der Verfahren.

Ein bisher verwendetes Anwendungsprogramm führt sowohl die Signalisierung als auch die Verbindungssteuerung aus. Dabei werden Signalisierungsdaten und Verbindungsdaten bearbeitet. Aufgrund seiner Größe ist das bisher für die Signalisierung und die Verbindungssteuerung verwendete Anwendungsprogramm schwer überschaubar. Daraus resultiert ein hoher Aufwand beim Erstellen und Warten des Anwendungsprogramms. Außerdem wird bisher für jedes Übertragungsprotokoll, das an einem Teilnehmeranschluß oder einer Zwischenamtssignalisierung auftreten kann, ein eigenes Anwendungsprogramm verwendet. Dies erschwert das Erstellen und Warten der Anwendungsprogramme ebenfalls.

Aus der internationalen Patentanmeldung WO 93/00776 ist ein Softwaresystem für eine softwaregesteuerte Vermittlungseinrichtung beschrieben. Diese Vermittlungseinrichtung hat mehrere Telekommunikations-Steuerprogrammodule (telecommunications control modules) sowie mehrere Telekommunikations-Systemprogrammodule (telecommunications resources modules). Jedes Telekommunikations-Steuerprogrammodul hat Software zum Einbringen einer Reihe von Zusatzfunktionen, die zum Bereitstellen von Telekommunikationsdiensten für Teilanwendungen konfiguriert werden, ohne die Konfiguration anderer Anwendungen zu berücksichtigen. Jedes Telekommunikations-Systemprogrammodul führt gemeinsame Dienstleistungen durch, die von zwei oder von mehr Steuerprogrammodulen gebraucht werden.

Weiterhin hat die Vermittlungseinrichtung Mittel zum Bereitstellen von Kommunikationsverbindungen zwischen den Telekommunikations-Steuerprogrammodulen. Jede dieser Kommunikationsverbindungen hat Netzwerkprotokolle zum Austausch von Informationen, ohne daß irgendein Steuerprogrammodul beim Informationsaustausch das Vorhandensein eines weiteren Steuerprogrammoduls berücksichtigt, mit dem es in derselben Vermittlungsstelle kommuniziert.

Es ist Aufgabe der Erfindung, Verfahren zum Betreiben einer Vermittlungsstelle anzugeben, bei denen Anwendungsprogramme verwendet werden, die auf einfache Art erstellt und gewartet werden können. Weiterhin sollen zum Ausführen des Verfahrens geeignete Anschlußeinheiten angegeben werden.

Diese Aufgabe wird für Verfahren durch die im Patentanspruch 1 bzw. 2 angegebenen Verfahrensschritte gelöst. Weiterbildungen sind in den Unteransprüchen angegeben.

Die Erfindung geht von der Erkenntnis aus, daß die Signalisierung und die Verbindungssteuerung zwei klar voneinander zu unterscheidende Funktionen der Vermittlungsstelle sind. Solche unterschiedlichen Funktionen können in unterschiedlichen Anwendungsprogrammen ausgeführt werden. Eine Trennung des bisher zur Signalisierung und zum Verbindungsaufbau verwendeten gemeinsamen Anwendungsprogramms in zwei Anwendungsprogramme wird dadurch erschwert, daß Signalisierung und Verbindungssteuerung ein einheitliches zustands- und ereignisgesteuertes Verfahren bilden. Das bedeutet, daß Zustände festgelegt werden, die abhängig von vermittlungstechnischen Ereignissen nach einer vorgegebenen Abfolge durchlaufen werden. In dieser Abfolge sind Schritte zur Signalisierung und Schritte zur Verbindungssteuerung enthalten, wobei meist wiederholt zwischen Schritten zur Signalisierung und Schritten zur Verbindungssteuerung gewechselt wird.

Beim erfindungsgemäßen Verfahren wird ein erstes Anwendungsprogramm zur Signalisierung (LIP - line processing) und ein zweites Anwendungsprogramm zur Verbindungssteuerung (CAP - call processing) verwendet. Eine Meldungsschnittstelle ermöglicht es, daß die beiden Anwendungsprogramme ein einheitliches zustands- und ereignisgesteuertes Verfahren realisieren. Zur Meldungsschnittstelle gehören Vorgaben über die Struktur der zu übergebenden Daten sowie Vorgaben über die Art und Weise der Übergabe. Die Übergabe der zugehörigen Daten erfolgt unter Verwendung des Betriebssystems. Durch diese Maßnahme wird erreicht, daß im Gegensatz zu einem Unterprogrammaufruf vom selben Anwendungsprogramm eine weitere Meldung erzeugt werden kann, wobei es nicht erforderlich ist, daß die vorangehende Meldung bereits durch das andere Anwendungsprogramm bearbeitet worden ist.

Die Meldungsschnittstelle ermöglicht es, die Anwendungsprogramme ihrer Funktion nach zu modularisieren. Dadurch werden die Anwendungsprogramme überschaubar und damit leicht zu entwickeln und zu warten.

Durch das erfindungsgemäße Verfahren ist es ferner möglich, zu den verschiedenen Signalisierungsprotokollen jeweils ein Anwendungsprogramm zu erstellen. Die Schnittstelle wird so definiert, daß ein Anwendungsprogramm zur Verbindungssteuerung mit den verschiedenen Anwendungsprogrammen zur Signalisierung zusammenarbeiten kann. Durch diese Maßnahme ergeben sich Speicherplatzeinsparungen, sobald zwei oder mehr Protokolle zur Signalisierung in der Vermittlungsstelle verwendet werden und falls beim Abarbeiten der zweiten Anwendungsprogramme dieselbe Befehlsfolge verwendet wird, wie unten an Hand der Ausführungsbeispiele erläutert. Umgekehrt kann auch ein Anwendungsprogramm zur Signalisierung mit verschiedenen Anwendungsprogrammen zur Verbindungssteuerung zusammenarbeiten, wie sie beispielsweise bei den Leistungsmerkmalen "Dreierkonferenz" oder "Anklopfen" verwendet werden.

Die Erfindung betrifft außerdem Anschlußeinheiten für eine Vermittlungsstelle. Mit diesen Anschlußeinheiten werden die erfindungsgemäßen Verfahren durchgeführt. Somit gelten die oben genannten technischen Wirkungen auch für die Anschlußeinheiten.

Im folgenden werden Ausführungsbeispiele der Erfindung an Hand der beiliegenden Zeichnungen erläutert. Darin zeigen:
- Figur 1: eine Vermittlungsstelle mit mehreren Anschlußeinheiten,
- Figur 2: eine Anschlußeinheit mit mehreren Anschlußbaugruppen,
- Figur 3: eine Darstellung der Abläufe in der Anschlußeinheit, und
- Figur 4: einen Meldungsblock mit zugehörigem Datenblock.

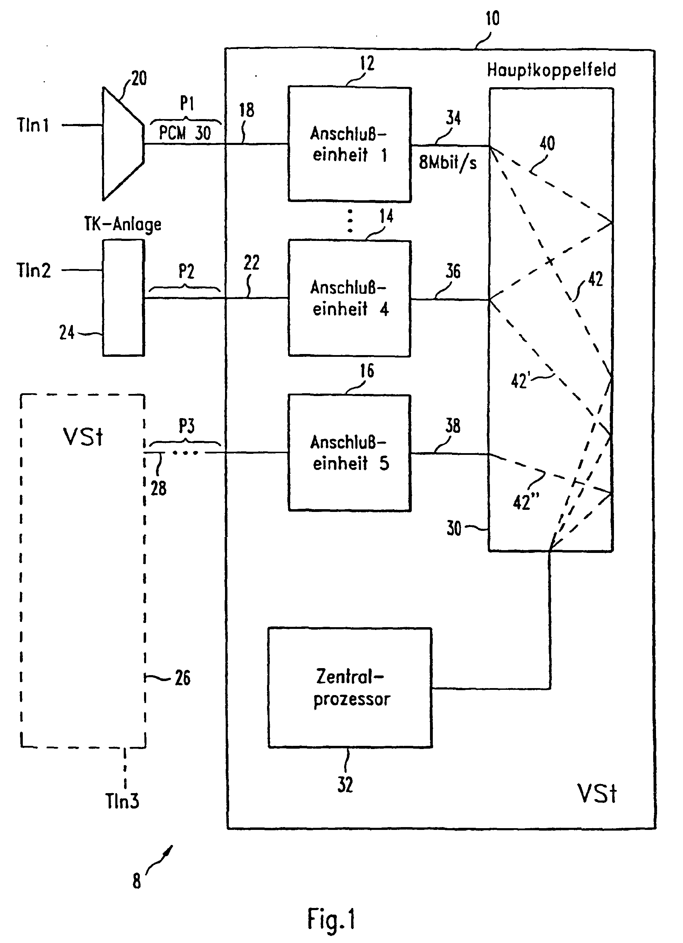

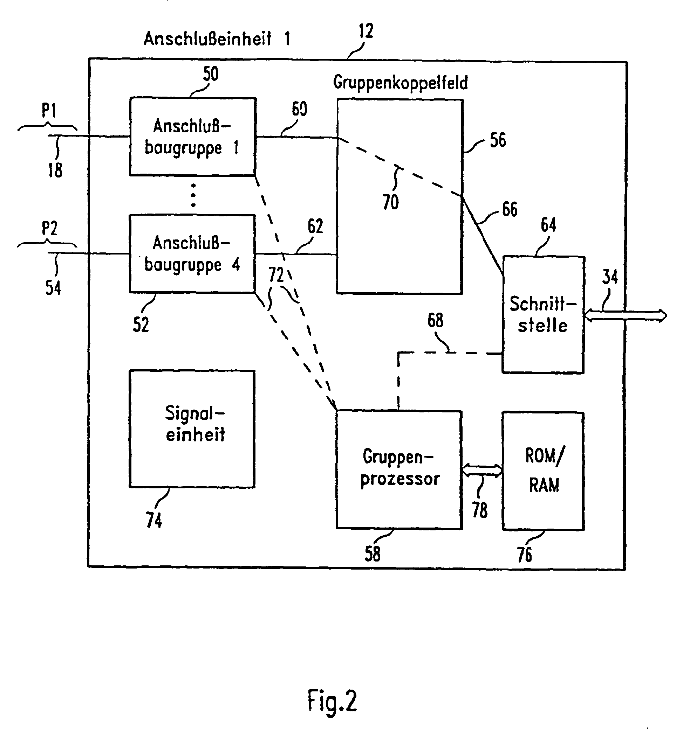

Figur 1 zeigt in einem Telekommunikationsnetz 8 eine Vermittlungsstelle 10, auch VSt abgekürzt, mit mehreren Anschlußeinheiten 12 bis 16, deren Aufbau an Hand der Anschlußeinheit 12 in Figur 2 erläutert wird. Durch Punkte sind weitere zwischen den Anschlußeinheiten 12 und 14 angeordnete Anschlußeinheiten angedeutet.

Eine Verbindungsleitung 18 verbindet die Anschlußeinheit 12 mit einer Konzentratoreinheit 20, an die eine Vielzahl von Teilnehmern angeschlossen ist, von denen in Figur 1 ein Teilnehmer Tln1 dargestellt ist. Die Konzentratoreinheit 20 bündelt einerseits die von den Teilnehmern kommenden Leitungen so, daß für die Übertragung der Sprachdaten zur Vermittlungsstelle 10 nur eine Leitung 18 verwendet werden muß. Andererseits teilt die Konzentratoreinheit 20 die über die Leitung 18 empfangenen Sprachdaten auf die Anschlußleitungen der Teilnehmer auf. Auf der Verbindungsleitung 18 wird ein PCM30-System (PCM=Pulse Code Modulation) verwendet, d.h. es stehen 30 Sprachkanäle zur Verfügung. Die Übertragung der PCM-Sprachdaten erfolgt nach einem ersten Protokoll P1, das ein SIEMENS-internes Protokoll ist. Als Protokoll P1 werden aber auch standardisierte Protokolle verwendet, z.B. die Protokolle MULDEX, V51 oder V52. Auf der Verbindungsleitung 18 können auch mehrere PCM30-Systeme oder auch PCM24-Systeme mit 24 Sprachkanälen verwendet werden.

Eine Verbindungsleitung 22 verbindet die Anschlußbaugruppe 14 mit einer Telekommunikationsanlage 24. Die Telekommunikationsanlage 24 ermöglicht es z.B. einer Firma innerhalb ihres Privatgeländes einen internen Kommunikationsverkehr zu vermitteln, bzw. Verbindungen nach außen aufzubauen. Einer der an der Telekommunikationsanlage 24 angeschlossenen Teilnehmer ist in Figur 1 als Teilnehmer Tln2 dargestellt. Die Übertragung der Sprachdaten erfolgt zwischen der TelekommunikationsAnlage 24 und der Anschlußeinheit 14 gemäß einem Protokoll P2, das sich vom Protokoll P1 unterscheidet.

Die Anschlußeinheit 16 ist mit einer weiteren Vermittlungsstelle 26 über eine Verbindungsleitung 28 verbunden. Die Übertragung von Sprach- und Signalisierungsdaten auf der Verbindungsleitung 28 erfolgt gemäß einem Protokoll P3, das aus Protokollen ausgewählt wurde, die speziell für die Verbindung zweier Vermittlungsstellen ausgelegt sind. Eine Verbindung vom Teilnehmer Tln1 zu einem an die Vermittlungsstelle 26 angeschlossenen Teilnehmer Tln3 wird mittels der Anschlußeinheit 16 aufgebaut.

Die Vermittlungsstelle 10 enthält weiterhin ein Haupt-Koppelfeld 30 sowie einen Zentralprozessor 32. Sämtliche Anschlußeinheiten 12 bis 16 sind mit dem Koppelfeld 30 über Verbindungsleitungen 34 bis 38 verbunden. Jede Verbindungsleitung 34 bis 38 hat eine Übertragungskapazität von acht MBit pro Sekunde, so daß jeweils Sprach- bzw. Steuerungsdaten über 128 Übertragungskanäle übertragen werden können. Der Zentralprozessor 32 steuert das Schalten von Verbindungen im Koppelfeld 30. Beispielsweise schaltet der Zentralprozessor 32 einen Sprachkanal 40, über den der Teilnehmer Tln1 mit dem Teilnehmer Tln2 sprechen kann. Ein Meldungskanal 42 wird vorher von der Anschlußeinheit 12 verwendet, um dem Zentralprozessor 32 mitzuteilen, daß der Teilnehmer Tln1 eine Verbindung zum Teilnehmer Tln2 aufbauen möchte. Nach Durchschalten der Verbindung werden weitere Steuerdaten zwischen den Anschlußeinheiten 12 bis 16 und dem Zentralprozessor über den Meldungskanal 40 bzw. über Meldungskanäle 42', 42'' ausgetauscht.

Die in Fig. 1 dargestellte Anschlußeinheit 16 wird für die Signalisierung zwischen den Vermittlungsstellen 10 und 26 verwendet. Auch in der Anschlußeinheit 16 gibt es Signalisierungsprogramme und Verbindungsprogramme, die über eine Meldungsschnittstelle Daten austauschen.

Figur 2 zeigt den Aufbau der Anschlußeinheit 12, in der vier Anschlußbaugruppen enthalten sind, von denen in Figur 2 zwei Anschlußbaugruppen 50 und 52 dargestellt sind. An der Anschlußbaugruppe 50 ist die Verbindungsleitung 18 angeschlossen. Die Anschlußbaugruppe 50 ist in der Lage, gemäß Protokoll P1 zu arbeiten.

An der Anschlußbaugruppe 52 ist eine Leitung 54 angeschlossen, die zu einer nicht dargestellten weiteren Telekommunikationsanlage führt. Das zur Übertragung über die Verbindungsleitung 54 verwendete Protokoll ist das Protokoll P2. Die Anschlußbaugruppe 52 ist in der Lage gemäß Protokoll P2 für Telekommunikationsanlagen zu arbeiten.

Die Anschlußeinheit 12 enthält weiterhin ein Gruppen-Koppelfeld 56 und einen Gruppen-Prozessor 58. Die Anschlußbaugruppen 50 bis 52 sind über Verbindungsleitungen 60 bis 62 mit dem Gruppen-Koppelfeld 56 verbunden, so daß im Gruppen-Koppelfeld 56 Verbindungen zwischen den Anschlußeinheiten 50 bis 52 und einer Schnittstelle 64 geschaltet werden können. Die Schnittstelle 64 ist über eine Verbindungsleitung 66 mit dem Gruppen-Koppelfeld 56 und über eine Verbindungsleitung 68 mit dem Gruppen-Prozessor 58 verbunden. Auf der anderen Seite der Schnittstelle 64 ist die Verbindungsleitung 34 angeschlossen.

Die in Figur 1 dargestellte Verbindung 40 vom Teilnehmer Tln1 zum Teilnehmer Tln2 wird unter Verwendung einer Verbindung 70 im Koppelfeld 56 geschaltet. Der Übertragungskanal für die Verbindung vom Teilnehmer Tln1 zum Teilnehmer Tln2 wird somit über die Verbindungsleitung 18, die Anschlußbaugruppe 50, die Verbindungsleitung 60, die Verbindung 70, die Verbindungsleitung 66, die Schnittstelle 64 und die Verbindungsleitung 34 geschaltet.

Die Anschlußbaugruppen 50 bis 52 sind über ein Bussystem 72 mit dem Gruppen-Prozessor 58 verbunden. Der Gruppen-Prozessor 58 kann über das Bussystem 72 das Schalten von Verbindungen im Gruppen-Koppelfeld 56 steuern.

Die Anschlußeinheit 12 enthält außerdem eine Signaleinheit 74, die unter anderem einen Tongenerator, einen Rufstromgenerator, einen Zählimpulsgeber und einen Doppelton-Selektivruf-Empfänger (DTMF-Dual Tone Multifrequency) enthält. Die Signaleinheit 74 ist über nicht dargestellte Verbindungen mit den Anschlußbaugruppen 50, 52, dem Gruppen-Koppelfeld 56 und mit dem Gruppen-Prozessor 58 verbunden.

In der Anschlußeinheit 12 ist außerdem eine Speichereinheit 76 enthalten, die über einen Bus 78 mit dem Gruppen-Prozessor 58 verbunden ist. In der Speichereinheit 76 sind Programme gespeichert, bei deren Abarbeitung durch den Gruppenprozessor 58, die Signalisierung und die Verbindungssteuerung realisiert werden.

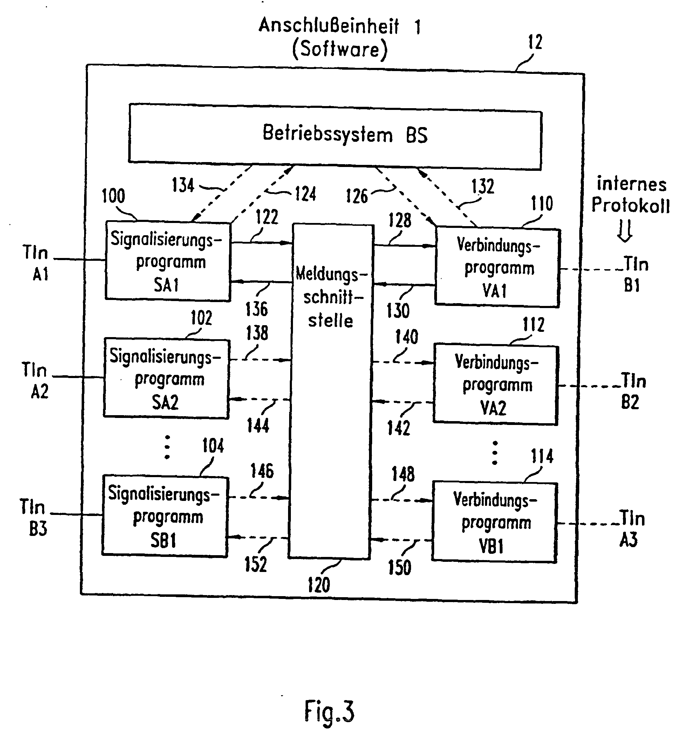

Figur 3 zeigt in der Anschlußeinheit 12 auftretende Abläufe. Beim Abarbeiten der Befehle eines ebenfalls im Speicher 76 gespeicherten Betriebssystems BS durch den Gruppen-Prozessor 58 werden die in der Anschlußeinheit 12 enthaltenen Schaltungen angesteuert, beispielsweise die Anschlußbaugruppen 50, 52 oder die Schnittstelle 64. Das Betriebssystem BS ist somit das Bindeglied zwischen den schaltungstechnischen Komponenten in der Anschlußeinheit 12 und sogenannten Anwendungsprogrammen, bei deren Abarbeiten die Anschlußeinheit 12 vermittlungstechnische Funktionen ausführt. Von diesen Anwendungsprogrammen sind in Figur 3 Signalisierungsprogramme 100 bis 104 und Verbindungsprogramme 110 bis 114 gezeigt.

Das Signalisierungsprogramm 100 wird für eine Verbindung verwendet, die ein an der Leitung 18 angeschlossener Teilnehmer TlnA1 zu einem Teilnehmer TlnB1 aufbaut. Beim Abarbeiten des Signalisierungsprogramms 100 wird die Signalisierung an der Anschlußbaugruppe 50 durchgeführt, so daß gemäß Protokoll P1 Sprachdaten und Signalisierungsdaten übertragen werden. Außerdem wird zur Verbindung des Teilnehmers TlnA1 zum Teilnehmer TlnB1 das Verbindungsprogramm 110 verwendet. Beim Abarbeiten des Verbindungsprogramms 110 wird die Verbindungssteuerung ausgeführt, d.h. der Verbindungsaufbau, die Durchschaltung des Gruppen-Koppelfeldes usw. sowie der Verbindungsabbau. Daten werden zwischen dem Signalisierungsprogramm 100 und dem Verbindungsprogramm 110 ausschließlich über eine Meldungsschnittstelle 120 ausgetauscht. Sowohl das Signalisierungsprogramm 100 als auch das Verbindungsprogramm 110 arbeiten nach dem Zustand-Anreiz-Prinzip. Das bedeutet, daß Zustände festgelegt werden, in denen bestimmte äußere Anreize definiert sind, die wiederum andere Zustände zur Folge haben. Ein Beispiel für dieses Zustand-Anreiz-Prinzip wird weiter unten erläutert. Damit das Signalisierungsprogramm 100 und das Verbindungsprogramm 110 auch untereinander nach dem Zustand-Anreiz-Prinzip arbeiten können, wird zum Datenaustausch über die Meldungsschnittstelle 120 das Betriebssystem BS herangezogen.

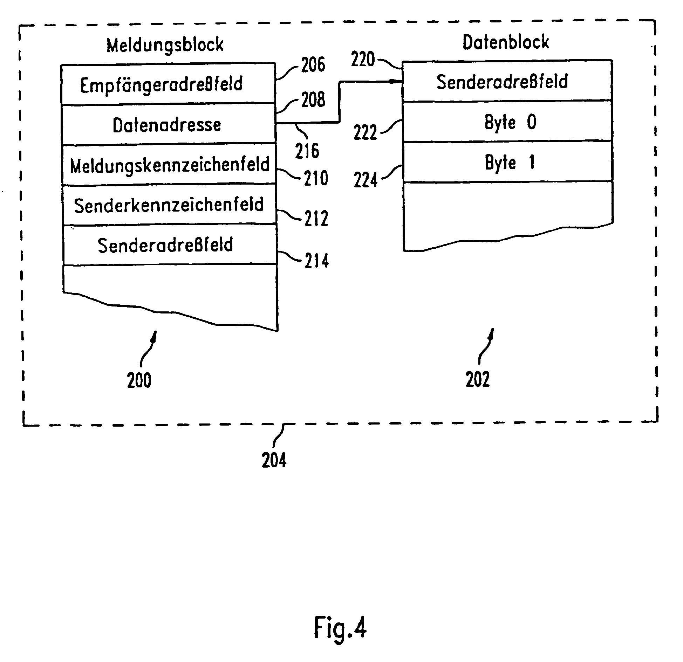

Sollen beispielsweise Daten vom Signalisierungsprogramm 100 über die Meldungsschnittstelle 120 zum Verbindungsprogramm 110 übertragen werden, so erzeugt das Signalisierungsprogramm einen Meldungsblock, der, wie unten an Hand der Figur 4 noch erläutert, in einem vorher festgelegten Speicherbereich im Speicher 76 der Anschlußeinheit 12 gespeichert wird, vgl. Pfeil 122. Anschließend benachrichtigt das Signalisierungsprogramm 100 das Betriebssystem BS vom Erzeugen des Meldungsblocks, vgl. Pfeil 124. Das Betriebssystem steuert den Ablauf der Anwendungsprogramme 100 bis 114. An der durch den Pfeil 124 angedeuteten Nachricht erkennt das Betriebssystem BS, daß das Signalisierungsprogramm 100 einen Meldungsblock für das Verbindungsprogramm 110 erzeugt hat. Demzufolge veranlaßt das Betriebssystem BS, daß nunmehr das Verbindungsprogramm 110 abgearbeitet wird, vgl. Pfeil 126. Beim Abarbeiten des Verbindungsprogramms 110 wird der im Speicher gespeicherte Meldungsblock gelesen, vgl. Pfeil 128. Die im Meldungsblock enthaltene Nachricht wird vom Verbindungsprogramm 110 bearbeitet. Danach ist wieder ein vorgegebener Zustand beim Abarbeiten des Verbindungsprogramms 110 erreicht. Das Verbindungsprogramm 110 wartet dann auf einen neuen Anreiz. Dieser Anreiz kommt beispielsweise von seiten des Teilnehmers TlnB1, woraufhin vom Betriebssystem BS die Ausführung des Verbindungsprogramms 110 erneut veranlaßt wird.

Sind beim Abarbeiten des Verbindungsprogramms 110 Nachrichten oder Daten an das Signalisierungsprogramm 100 zu übergeben, so wird ebenfalls die Meldungsschnittstelle 120 benutzt. Dazu wird wiederum ein Meldungsblock verwendet, der im Speicher gespeichert wird, vgl. Pfeil 130. Danach benachrichtigt das Verbindungsprogramm 110 das Betriebssystem BS über das Erzeugen des Meldungsblocks, vgl. Pfeil 132. Das Betriebssystem BS veranlaßt, daß das zugehörige Signalisierungsprogramm 100 erneut gestartet wird, vgl. Pfeil 134. Beim Abarbeiten des Signalisierungsprogramms 134 wird dann der vom Verbindungsprogramm 110 erzeugte Meldungsblock gelesen, vgl. Pfeil 136. Der Aufbau eines Meldungsblocks wird weiter unten an Hand der Figur 4 genauer erläutert.

Beim Beispiel nach Figur 3 wird eine weitere Verbindung zwischen einem an der Anschlußbaugruppe 52 angeschlossenen Teilnehmer TlnA2 und einem Teilnehmer TlnB2 durch den Teilnehmer TlnA2 veranlaßt. Bei der Verbindung zwischen dem Teilnehmer TlnA2 und dem Teilnehmer TlnB2 wird zur Signalisierung gemäß dem Protokoll P2 das Signalisierungsprogramm 102 verwendet. Beim Abarbeiten dieses Signalisierungsprogramms 102 wird die Anschlußbaugruppe 52 angesteuert. Somit unterscheiden sich die Signalisierungsprogramme 100 und 102, weil sie schaltungstechnische Komponenten ansteuern, die Signale gemäß verschiedener Protokolle P1 und P2 erzeugen.

Außerdem wird für die Verbindung der Teilnehmer T1nA2 und TlnB2 das Verbindungsprogramm 112 für die Verbindungssteuerung verwendet. Die Verbindungssteuerung ist unabhängig vom verwendeten Signalisierungsprotokoll P1 bzw. P2, so daß dasselbe Verbindungsprogramm für die Verbindungen 110 und 112 eingesetzt wird.

Beim Austausch von Nachrichten zwischen dem Signalisierungsprogramm 102 und dem zugehörigen Verbindungsprogramm 112 wird wiederum die Meldungsschnittstelle 120 verwendet, vgl. Pfeile 138 bis 144. Der Austausch von Meldungsblöcken erfolgt beim Abarbeiten des Signalisierungsprogramms 102 bzw. des Verbindungsprogramms 112 auf die gleiche Art und Weise, wie oben für das Signalisierungsprogramm 100 und das Verbindungsprogramm 110 erläutert. Obwohl in Figur 3 nicht dargestellt, wird auch beim Austausch von Meldungsblöcken zwischen dem Signalisierungsprogramm 102 und dem Verbindungsprogramm 112 das Betriebssystem BS mit einbezogen.

In Figur 3 ist außerdem eine Verbindung zwischen einem Teilnehmer TlnA3 und einem Teilnehmer TlnB3 dargestellt, die vom Teilnehmer TlnA3 an der Vermittlungsstelle 26, vgl. Figur 1, veranlaßt worden ist, wobei der Teilnehmer TlnB3 an der Konzentratoreinheit 20 angeschlossen ist. Für die Verbindung der Teilnehmer TlnA3 und TlnB3 werden das Signalisierungsprogramm 104 und das Verbindungsprogramm 114 verwendet. Das Verbindungsprogramm 114 unterscheidet sich vom Verbindungsprogramm 110 bzw. 112, weil die Verbindungssteuerung auf der gerufenen B-Seite anders durchzuführen ist, als die Signalisierung auf der rufenden A-Seite. Das Signalisierungsprogramm 104 enthält dagegen die gleichen Befehlsfolgen wie das Signalisierungsprogramm 100, weil beide Signalisierungsprogramme 100 und 104 nach dem gleichen Protokoll P1 arbeiten und das Protokoll P1 ein sogenanntes doppelt gerichtetes Protokoll ist, das in Richtung zum rufenden A-Teilnehmer genauso arbeitet wie in Richtung zum gerufenen B-Teilnehmer. Beim Austausch von Meldungsblöcken zwischen dem Verbindungsprogramm 104 und dem Signalisierungsprogramm 114 wird die Meldungsschnittstelle 120 verwendet, vgl. Pfeile 146 bis 152, wobei das Betriebssystem BS einbezogen wird.

Bei einem anderen, nicht dargestellten Ausführungsbeispiel gibt es für die Verarbeitungsprogramme 110 und 112 nur eine einzige Befehlsfolge im Speicher der Anschlußeinheit 12. Jedem Verbindungsprogramm 110 bzw. 112 wird eine gedachte Schnittstelle zugeordnet, zu der Schnittstellendaten gehören. In den Schnittstellendaten wird vermerkt, welches Verbindungsprogramm 110 bzw. 112 zur jeweiligen Schnittstelle gehört. Außerdem wird vom zur jeweiligen Schnittstelle gehörenden Verbindungsprogramm 110 bzw. 112 in den Schnittstellendaten der jeweils letzte Zustand vermerkt. Beim Abarbeiten der den Verbindungsprogrammen 110 und 112 gemeinsamen Befehlsfolge ist bekannt, welches Verbindungsprogramm 110 bzw. 112 gerade abzuarbeiten ist. An Hand der zu diesem Verbindungsprogramm 110 bzw. 112 gehörenden Schnittstellendaten kann der letzte Bearbeitungszustand festgestellt werden und die Bearbeitung in diesem Zustand fortgesetzt werden. Ebenso wird vorgegangen, wenn mehrere Signalisierungsprogramme 100, 102 bzw. 104 des gleichen Protokolls P1 bzw. P2 sowie der gleichen Verbindungsseite auszuführen sind.

Figur 4 zeigt ein Beispiel für einen Meldungsblock 200 und einen zugehörigen Datenblock 202, die in einem Speicher 204 der Anschlußbaugruppe 12 gespeichert sind. Der Meldungsblock 200 enthält ein Empfängeradreßfeld 206, ein Datenadreßfeld 208, ein Meldungskennzeichenfeld 210, ein Senderkennzeichenfeld 212 und ein Senderadreßfeld 214. Im Empfängeradreßfeld 206 ist die Adresse des Signalisierungsprogramms 100 bis 104 bzw. des Verbindungsprogramms 110 bis 114 gespeichert, für das der Meldungsblock 200 bestimmt ist. An Hand der Empfängeradresse im Empfängeradreßfeld 206 bestimmt das Betriebssystem BS das Anwendungsprogramm 100 bis 114, welches den Meldungsblock 200 bearbeiten soll.

Im Datenadreßfeld 208 ist die Adresse eines ersten Datenfeldes 220 des Datenblocks 202 enthalten. Beim Bearbeiten des Meldungsblocks 200 kann an Hand der Datenadresse 208 auf den Datenblock 202 zugegriffen werden, vgl. Pfeil 216.

Im Meldungskennzeichenfeld 210 wird die Art der im Meldungsblock 200 enthaltenen Meldung angegeben. Somit kann die Bearbeitung des Meldungsblocks 200 vom Typ der Meldung durchgeführt werden.

Im Senderkennzeichenfeld 212 ist das Kennzeichen des Anwendungsprogramms 100 bis 114 vermerkt, das den Meldungsblock 200 erzeugt hat. Im Senderadreßfeld 214 ist die Adresse des Anwendungsprogramms 100 bis 114 vermerkt, welches den Meldungsblock 200 erzeugt hat. Die Datenfelder 212 und 214 werden gegebenenfalls bei der Bearbeitung des Meldungsblocks 200 ausgewertet.

Der Datenblock 202 enthält neben dem ersten Datenfeld 220 weitere Datenfelder 222, 224 usw., in denen zu übermittelnde Daten gespeichert sind. Im Datenfeld 220 ist wie auch im Datenfeld 214 die Adresse desjenigen Anwendungsprogramms 100 bis 114 gespeichert, welches den Datenblock 202 erzeugt hat.

In einem anderen, nicht dargestellten Ausführungsbeispiel sind im Meldungsblock 200 bzw. im Datenblock 202 andere bzw. zusätzliche Datenfelder vorhanden.

## Patentansprüche

1. Verfahren zum Betreiben einer Anschlußeinheit (12) in einer Vermittlungsstelle (10),
bei dem die Signalisierung für einen ersten Teilnehmer (TInA1) beim Ausführen eines ersten Anwendungsprogramms (100) durch einen in der Anschlußeinheit (12) enthaltenen Prozessor (58) durchgeführt wird,
Verfahrensschritte zur Verbindungssteuerung zwischen dem ersten Teilnehmer (TlnA1) und einem zweiten Teilnehmer (TlnB1) beim Ausführen eines zweiten Anwendungsprogramms (110) durchgeführt werden,
bei der Signalisierung erzeugte Signalisierungsdaten (200) an einer Meldungsschnittstelle (120) unter Verwendung eines Betriebssystems (BS) zum Steuern des Ablaufs der Anwendungsprogramme (100, 110) an das zweite Anwendungsprogramm (110) übergeben werden,
und/oder bei dem bei der Verbindungssteuerung (110) erzeugte Verbindungsdaten an der Meldungsschnittstelle (120) unter Verwendung des Betriebssystems (BS) an das erste Anwendungsprogramm (100) übergeben werden.

2. Verfahren zum Betreiben einer Anschlußeinheit (16) in einer Vermittlungsstelle (10),
bei dem die Signalisierung mit einer weiteren Vermittlungsstelle (26) beim Ausführen eines ersten Anwendungsprogramms durch einen in der Anschlußeinheit (16) enthaltenen Prozessor durchgeführt wird,
Verfahrensschritte zur Verbindungssteuerung zwischen den beiden Vermittlungsstellen (10, 26) beim Ausführen eines zweiten Anwendungsprogramms durchgeführt werden,
bei der Signalisierung erzeugte Signalisierungsdaten (200) an einer Meldungsschnittstelle unter Verwendung eines Betriebssystems (BS) zum Steuern des Ablaufs der Anwendungsprogramme an das zweite Anwendungsprogramm übergeben werden,
und/oder bei dem bei der Verbindungssteuerung erzeugte Verbindungsdaten an der Meldungsschnittstelle unter Verwendung des Betriebssystems (BS) an das erste Anwendungsprogramm übergeben werden.

3. Verfahren nach Anspruch 1 oder 2, **dadurch gekennzeichnet, daß** die erzeugten Signalisierungsdaten (200) und/oder die Verbindungsdaten Nachrichten mit vorgegebenem Aufbau enthalten.

4. Verfahren nach Anspruch 3, **dadurch gekennzeichnet, daß** die Nachrichten ein Empfängerkennzeichen (206),
und/oder einen Adreßverweis (208) auf einen Datenblock (202) mit zu übertragenden Daten,
und/oder ein Nachrichtenkennzeichen (210) zum Unterscheiden verschiedener Nachrichten,
und/oder ein Nachrichtentypkennzeichen zum Kennzeichnen der Art der Nachricht,
und/oder Angaben (212, 214) über das die Nachricht erzeugende Anwendungsprogramm (100, 110) enthalten.

5. Verfahren nach einem der vorhergehenden Ansprüche, **dadurch gekennzeichnet, daß** die Signalisierungsdaten (200) und/oder die Verbindungsdaten einen Datenblock (202) enthalten,
und daß der Datenblock vorzugsweise neben zu übermittelnden Daten (222, 224) weitere Daten (220) enthält, mit denen der Datenblock (202) einem oder mehreren Anwendungsprogrammen (100, 110) zugeordnet werden kann.

6. Verfahren nach einem der vorhergehenden Ansprüche, **dadurch gekennzeichnet, daß** mindestens zwei erste Anwendungsprogramme (100, 102) zur Signalisierung mit unterschiedlichen Protokollen (P1, P2) verwendet werden,
und daß die ersten Anwendungsprogramme mit zweiten Anwendungsprogrammen (110, 112) über eine gemeinsame oder mehrere Meldungsschnittstellen (120) Signalisierungsdaten (200) und/oder Verbindungsdaten austauschen,
und daß vorzugsweise beim Abarbeiten der zweiten Anwendungsprogramme dieselbe Befehlsfolge ausgeführt wird.

7. Verfahren nach einem der Ansprüche 1 bis 5, **dadurch gekennzeichnet, daß** mindestens zwei zweite Anwendungsprogramme mit gleichen oder unterschiedlichen Befehlsfolgen verwendet werden,
daß das erste Anwendungsprogramm mit den zweiten Anwendungsprogrammen über eine gemeinsame oder mehrere Meldungsschnittstellen Signalisierungsdaten und/oder Verbindungsdaten austauscht,
und daß bei zweiten Anwendungsprogrammen mit gleichen Befehlsfolgen vorzugsweise dieselbe Befehlsfolge verwendet wird.

8. Anschlußeinheit (12) für eine Vermittlungsstelle (10), insbesondere zum Durchführen des Verfahrens nach Anspruch 1 oder einem der Ansprüche 1 bis 7,
mit mindestens einem Teilnehmeranschluß (50) zum Anschließen eines ersten Teilnehmers (TlnA1),
mindestens einem weiteren Anschluß (64) zum Aufbau eines Übertragungskanals zu einem zweiten Teilnehmer (TlnB1), mit Anwendungsprogrammen (100) bis (114) zum Ausführen vermittlungstechnischer Vorgänge, zu denen die Signalisierung am Teilnehmeranschluß (50) und Verfahrensschritte zur Verbindungssteuerung gehören,
wobei bei der Signalisierung erzeugte Signalisierungsdaten (200) bei der Verbindungssteuerung und/oder bei der Verbindungssteuerung erzeugte Verbindungsdaten bei der Signalisierung verwendet werden,
und mit einem den Ablauf der Anwendungsprogramme (100 bis 114) steuernden Betriebssystem (BS),
**dadurch gekennzeichnet, daß** die Signalisierungsdaten (200) und/oder die Verbindungsdaten an mindestens einer Meldungsschnittstelle (120) unter Verwendung des Betriebssystems (BS) übergebbar sind.

9. Anschlußeinheit (16) für eine Vermittlungsstelle (10), insbesondere zum Durchführen des Verfahrens nach einem der Ansprüche 2 bis 7,
mit mindestens einem Anschluß zum Anschließen einer weiteren Vermittlungsstelle (26),
mit Anwendungsprogrammen zum Ausführen vermittlungstechnischer Vorgänge, zu denen die Signalisierung am Anschluß und Verfahrensschritte zur Verbindungssteuerung gehören,
wobei bei der Signalisierung erzeugte Signalisierungsdaten (200) bei der Verbindungssteuerung und/oder bei der Verbindungssteuerung erzeugte Verbindungsdaten bei der Signalisierung verwendet werden,
und mit einem den Ablauf der Anwendungsprogramme steuernden Betriebssystem (BS),
**dadurch gekennzeichnet, daß** die Signalisierungsdaten (200) und/oder die Verbindungsdaten an mindestens einer Meldungsschnittstelle unter Verwendung des Betriebssystems (BS) übergebbar sind

10. Anschlußeinheit (12, 16) nach Anspruch 8 oder 9, **dadurch gekennzeichnet, daß** die Signalisierung durch ein erstes Anwendungsprogramm (100) und die Verfahrensschritte zur Verbindungssteuerung durch ein zweites Anwendungsprogramm (110) ausführbar sind.

11. Vermittlungsstelle (10), **gekennzeichnet durch** eine Anschlußeinheit (12, 16) nach einem der Ansprüche 8 bis 10.

## Claims

1. Method for operating a line unit (12) in an exchange (10), in which the signalling for a first subscriber (TlnA1) on execution of a first application program (100) is executed by a processor (58) contained in the line unit (12), Procedural steps for call control between the first subscriber (TlnA1) and a second subscriber (TlnB1) are performed on execution of a second application program (110),
Signalling data (200) created during signalling is transferred at a message interface (120) to the second application program (110) using an operating system (BS) for control of the execution sequence of the application programs (100, 110),
and/or in which call control data created during call control (110) is transferred at the message interface (120) to the first application program (100) using the operating system (BS).

2. Method for operating a line unit (16) in an exchange (10), in which the signalling with a further exchange (26) is performed by a processor contained in the line unit (16) on execution a first application program,
Procedural steps for call control between the two exchanges (10, 26) are performed on execution of a second application program, in which signalling data (200) created during signalling is transferred to the second application program at a message interface using an operating system (BS) for controlling the execution sequence of the application programs,
and/or in which call control data created during call control is transferred at the message interface to the first application program using the operating system (BS).

3. Method in accordance with claim 1 or 2, **characterized in that**
the signalling data (200) and/or the call control data created contain messages with a predetermined structure.

4. Method according to claim 3, **characterized in that** the messages contain an identifier code (206),
and/or an address reference (208) to a data block (202) with data to be transmitted,
and/or a message identifier (210) for distinguishing between different messages,
and/or a message type identifier for distinguishing between message types
and/or information (212, 214) about the application program (100, 110) generating the message.

5. Method in accordance with one of the previous claims,
**characterized in that** the signalling data (200) and/or the call control data contain a data block (202),
and that the data block, in addition to data for transmission (222, 224) preferably contains further data (220) with which the data block (202) can be assigned to one or more application programs (100, 110).

6. Method in accordance with one of the previous claims,
**characterized in that** at least two first application programs (100, 102) are used for signalling with different protocols (P1, P2), and that the first application program exchanged signalling data (200) and/or call control data with the second application program (110, 112) over one common message interface or
over a number of message interfaces (120),
and that preferably on processing of the second application programs the same command sequence will be executed.

7. Method in accordance with one of the claims 1 to 5,
**characterized in that**, at least two second application programs are used with same or different command sequences, that the first application program exchanges signalling data and/or call control data with the second application program over one common message interface or a number of message interfaces,
and that with second application programs with similar command sequences preferably the same command sequence is used.

8. Line unit (12) for an exchange (10), especially to carry out the method in accordance with claim 1 or one of the claims 1 to 7,
with at least one subscriber port (50) for connecting a first subscriber (TlnA1),
at least one further port (64) for setting up a transmission channel to a second subscriber (TlnB1), with application programs (100) to (114) for executing call control processes, to which the signalling at the subscriber line (50) and method steps for call control belong,
with signalling data (200) created during signalling being used in call control and/or data created in call control being used in signalling,
and with an operating system (BS) controlling the execution sequence of the application programs (100 to 114),
**characterized in that** the signalling data (200) and/or the call control data can be transferred at at least one message interface (120) using the operating system (BS).

9. Line unit (16) for an exchange (10), especially to carry out the method in accordance with one of the claims 2 to 7, with at least one port for connecting a further exchange (26),
with application programs for executing call control processes to which the signalling at the port and procedural steps for call control belong, with signalling data created during signalling (200) being used for call control and/or call control data created during call control being used for signalling,
and with an operating system controlling the execution sequence of the application programs (BS),
**characterized in that** the signalling data (200) and/or the call control data can be transferred at one message interface using the operating system (BS).

10. Line unit (12, 16) in accordance with claim 8 or 9,
**characterized in that** the signalling can be performed by a first application program (100) and the procedural steps for call control by a second application program (110).

11. Exchange (10), **characterized by** line unit (12, 16) in accordance with one of the claims 8 to 10.

## Revendications

1. Procédé pour faire fonctionner une unité (12) de raccordement dans un central (10) téléphonique,
dans lequel on effectue la signalisation pour un premier abonné (TlnA1) lors de l'exécution d'un premier programme (100) d'application par un processeur (58) contenu dans l'unité (12) de raccordement,
on effectue des stades de procédé pour la commande d'appel entre le premier abonné (TlnA1) et un deuxième abonné (TlnB1) lors de l'exécution d'un deuxième programme (110) d'application,
dans lequel on transmet des données (200) de signalisation produites lors de la signalisation à une interface (120) d'indication en utilisant un système (BS) de fonctionnement pour commander le déroulement des programmes (100, 110) d'application sur le deuxième programme (110) d'application,
et/ou dans lequel on transmet des données d'appel produites lors de la commande (110) d'appel à l'interface (120) d'indication en utilisant le système (BS) de fonctionnement sur le premier programme (100) d'application.

2. Procédé pour faire fonctionner une unité (16) de raccordement dans un central (10) téléphonique,
dans lequel on effectue la signalisation avec un autre central (26) téléphonique lors de l'exécution d'un premier programme d'application par un processeur contenu dans l'unité (16) de raccordement,
on effectue des stades de procédé pour la commande d'appel entre les deux centraux (10, 26) téléphoniques lors de l'exécution d'un deuxième programme d'application,
dans lequel on transmet des données (200) de signalisation produites lors de la signalisation à une interface d'indication en utilisant un système (BS) de fonctionnement pour commander le déroulement des programmes d'application sur le deuxième programme d'application,
et/ou dans lequel on transmet des données d'appel produites lors de la commande d'appel à l'interface d'indication en utilisant le système (BS) de fonctionnement sur le premier programme d'application.

3. Procédé suivant la revendication 1 ou 2,
**caractérisé en ce que** les données (200) de signalisation produites et/ou les données d'appel contiennent des messages d'une structure donnée à l'avance.

4. Procédé suivant la revendication 3, **caractérisé en ce que** les messages contiennent une caractéristique (206) de récepteur et/ou une indication (208) d'adresse sur un bloc (202) de données avec des données à transmettre,
et/ou une caractéristique (210) de message pour distinguer des messages différents,
et/ou une caractéristique de type de message pour caractériser le type de message,
et/ou des indications (212, 214) sur le programme (100, 110) d'application produisant le message.

5. Procédé suivant l'une des revendications précédentes, **caractérisé en ce que** les données (200) de signalisation et/ou les données d'appel contiennent un bloc (202) de données,
et **en ce que** le bloc de données contient de préférence, outre des données (222, 224) à transmettre, d'autres données (220) par lesquelles le bloc (202) de données peut être associé à un ou à plusieurs programmes (100, 110) d'application.

6. Procédé suivant l'une des revendications précédentes, **caractérisé en ce que** l'on utilise au moins deux programmes (100, 102) d'application pour la signalisation par des protocoles (P1, P2) différents,
et **en ce que** les premiers programmes d'application échangent avec des deuxièmes programmes (110, 112) d'application, par une interface (120) commune ou par plusieurs interfaces (120) communes d'indication, des données (200) de signalisation et/ou des données d'appel,
et **en ce que**, de préférence lors de l'élaboration des deuxièmes programmes d'application, il s'effectue la même suite d'instructions.

7. Procédé suivant l'une des revendications 1 à 5, **caractérisé en ce que** l'on utilise au moins deux deuxièmes programmes d'application ayant des suites d'instructions identiques ou différentes,
**en ce que** le premier programme d'application échange avec les deuxièmes programmes d'application, par des interfaces communes ou par plusieurs interfaces d'indication, des données de signalisation et/ou des données d'appel,
et **en ce que** l'on utilise pour des deuxièmes programmes d'application ayant les mêmes suites d'instructions de préférence la même suite d'instructions.

8. Unité (12) de raccordement pour un central (10) téléphonique, notamment pour la mise en oeuvre du procédé suivant la revendication 1 ou l'une des revendications 1 à 7,
comprenant un raccordement (50) d'abonné pour raccorder un premier abonné (TlnA1),
au moins un autre raccordement (64) pour établir une voie de transmission vers un deuxième abonné (TlnB1),
des programmes (100) à (114) d'application pour réaliser des opérations de commutation parmi lesquelles figurent la signalisation au raccordement (50) d'abonné et des stades de procédé pour la commande d'appel,
dans laquelle les données (200) de signalisation produites lors de la signalisation sont utilisées dans la commande d'appel et/ou dans les données d'appel produites par la commande d'appel lors de la signalisation et
un système (BS) de fonctionnement commandant le déroulement des programmes (100 à 114) d'application,
**caractérisée en ce que** les données (200) de signalisation et/ou les données d'appel sont transmises à au moins une interface (120) d'indication en utilisant le système (BS) de fonctionnement.

9. Unité (16) de raccordement pour un central (10) téléphonique, notamment pour la mise en oeuvre du procédé suivant l'une des revendications 2 à 7,
comprenant au moins un raccordement pour raccorder un autre central (26) téléphonique,
des programmes d'application pour effectuer des opérations de commutation dont font partie la signalisation au raccordement et des stades de procédé de commande d'appel, des données (200) de signalisation produites lors de la signalisation étant utilisées lors de la commande d'appel et/ou des données de commande d'appel produites pour la commande d'appel étant utilisées lors de la signalisation,
et un système (BS) de fonctionnement commandant le déroulement des programmes d'application,
**caractérisée en ce que** les données (200) de signalisation et/ou les données d'appel peuvent être transmises sur au moins une interface d'indication en utilisant le système (BS) de fonctionnement.

10. Unité (12, 16) de raccordement suivant la revendication 8 ou 9, **caractérisée en ce que** la signalisation peut être effectuée par un premier programme (100) d'application et le stade de procédé pour la commande d'appel par un deuxième programme (110) d'application.

11. Central (10) téléphonique, **caractérisé par** une unité (12, 16) de raccordement suivant l'une des revendications 8 à 10.
